# EUROPÄISCHE PATENTSCHRIFT

(11) **EP 2 783 045 B1**
(45) Veröffentlichungstag und Bekanntmachung des Hinweises auf die Patenterteilung: **03.02.2016**
(21) Anmeldenummer: 12790880.4
(22) Anmeldetag: 21.11.2012
(51) Int. Cl.: E01C 5/06

(54) **PFLASTERELEMENT AUS KUNSTSTEIN UND VERFAHREN ZU SEINER HERSTELLUNG**
PAVING MADE OF ARTIFICIAL STONE AND METHOD FOR PRODUCING THE SAME
PAVÉ EN PIERRE ARTIFICIELLE ET PROCÉDÉ DE FABRICATION DUDIT PAVÉ

(30) Priorität: 21.11.2011 DE 102011086760
(43) Veröffentlichungstag der Anmeldung: 01.10.2014
(73) Patentinhaber: Windmolders Beton N.V, 3540 Herk-De-Stadt (BE); W. Blocken. Com. C.V., 3700 Tongeren (BE)
(72) Erfinder: WINDMOLDERS, Danny, 3540 Schulen (BE); BLOCKEN, Wilfried, B-3732 Schalkhoven (BE)
(74) Vertreter: Bauer, Wulf
(86) Internationale Anmeldenummer: PCT/EP2012/073176
(87) Internationale Veröffentlichungsnummer: WO 2013/076115

(56) Entgegenhaltungen:
- DE-A1- 3 326 846
- DE-A1- 4 036 461
- DE-U1- 7 736 983
- DE-U1- 7 923 025
- DE-U1-202006 019 600
- DE-U1-202011 000 442

## Beschreibung

Die Erfindung bezieht sich auf ein mehreckiges Pflasterelement aus Kunststein nach dem Oberbegriff des Anspruchs 1. Derartige Pflasterelemente, zu denen insbesondere Betonformsteine gehören, werden für Fahrwege aller Art eingesetzt. Sie lassen sich mehr oder weniger fugenlos verlegen. Sie werden im Verband verlegt. Ziel ist es, eine möglichst glatte, ebene Oberfläche für den Verkehr, beispielsweise Straßen, Fahrwege, Fußgängerzonen, Fahrradwege bereitzustellen. Ein Rad, beispielsweise eines Kraftfahrzeugs, eines Fahrrads oder eines Kinderwagens, soll möglichst gleichmäßig über die Fahrfläche abrollen können, ohne dass es zu Unregelmäßigkeiten beim Abrollen kommt. Derartige Unregelmäßigkeiten sollen insbesondere in den Übergängen zwischen benachbarten Pflasterelementen nicht auftreten.

Ein Pflasterelement der eingangs genannten Art ist aus DE 40 36 461 A1 bekannt. Die Pflasterelemente weisen Eckbereiche, eine umlaufende Fase und zusätzlich an den Seitenflächen eine Nut und Feder Konstruktion auf, die zu einer vergrößerten Fuge führt. Diese Merkmale sorgen für ein unruhiges Abrollverhalten von Rädern auf einer gebildeten Fahrwegobenfläche.

Die DE 84 03 268 U1 offenbart ein Pflasterelement, das ebenso wie das Pflasterelement aus der oben erwähnten DE 40 36 461 A1 eine umlaufende Fase aufweist. Das Pflasterelement hat im Wesentlichen die Form eines Quaders. Es hat vier Ecken. Die Oberseite des Pflasterelements wird durch eine im Wesentlichen rechteckförmige Hauptfläche und eine daran anschließende, runde Fase gebildet. Die Fase läuft rahmenförmig um die Hauptfläche herum. Die Fase des vorbekannten Pflasterelements ist rund und relativ ausgeprägt, so dass ein glattes Abrollen eines Rades beim verbundverlegten Pflastersteinen nicht zu erreichen ist.

Aus EP 0 990 072 B2 ist ein Pflasterelement bekannt, das jedoch keine ebene Hauptseite aufweist und daher für Fahrwege nicht bevorzugt geeignet ist.

Die DE 77 36 983 U1 offenbart einen Pflasterstein aus Beton mit abgerundeten Eckkanten, der aus Gründen der besseren gemeinsamen Verlegbarkeit über Distanzelemente an den Seitenflächen bzw. Endflächen verfügt. Durch diese Distanzelemente entstehen jedoch Fugen zwischen den verlegten Pflastersteinen, dies ist einer ebenen Fahrwegfläche abträglich.

Ein in der DE 20 2011 000442 U1 offenbarter Pflasterstein erfüllt die Aufgabe, eine möglichst große und möglichst leicht befüllbare Fuge zu schaffen, um so den direkten Kontakt zwischen den Pflastersteinen zu minimieren und Schäden an denselben zu vermeiden. Diese Fugen verhindern wieder eine ebene Fahrwegfläche.

Derartige Pflasterelemente werden üblicherweise in einem Sandbett, in einem Sand-Zement-Bett, in einem Weichbetonbett oder in einem Bett aus Normalbeton verlegt. Nach dem Verlegen werden die Pflasterelemente gerüttelt, dies erfolgt in der Regel durch eine Rüttelplatte. Rüttelplatten werden auch Vibrationsplatten genannt. Es handelt sich dabei um eine im Allgemeinen motorbetriebene Baumaschine, die auch zur Bodenverdichtung eingesetzt wird. Eine derartige Rüttelplatte ist beispielsweise aus der DE 10 2006 059 774 B4 bekannt.

Unmittelbar nach dem Verlegen sind die einzelnen Pflasterelemente noch nicht alle in einer Ebene. Das einzelne Pflasterelement ist in der Regel etwas aus der späteren Fahrwegebene verkippt, in der Regel steht eine Ecke etwas höher als der Rest des Pflasterelements. Durch das Rütteln soll erreicht werden, dass die einzelnen Pflasterelemente in die Fahrwegebene gebracht werden. Zugleich werde die Pflasterelemente durch das Rütteln in das Bett, in dem sie verlegt sind, eingedrückt.

Während des Rüttelns wird die Rüttelplatte über die verlegten Pflasterelemente bewegt. Diese Platte hat Einlaufkrümmer und eine ebene Plattenfläche. Wenn eine derartige Platte über frisch verlegte Pflasterelemente bewegt wird, kommt es vor, dass die Platte einen ersten Kontakt mit einem etwas höher liegenden Eckbereich des Pflastersteins hat. In diesem Fall kommt die volle Rüttelkraft der Platte auf diesen Eckbereich. Nun sind aber die Eckbereiche von Pflasterelementen die Bereiche mit geringster Festigkeit oder anders ausgedrückt, mit der höchsten Bruchgefahr. Nach der Neuverlegung von Pflasterelementen und dem Abrütteln durch eine Rüttelplatte kann man daher in der Regel eine Anzahl von Pflastersteinen auffinden, bei denen die Eckbereiche abgebrochen sind. Dies ist darauf zurückzuführen, dass zuviel Kraft in die Eckbereiche eingeleitet wurde.

Nun besteht eine Empfehlung dahingehend, dass frisch verlegte Pflasterelemente mit einer Gummimatte belegt werden, und dass die Rüttelvorrichtung durch diese Gummimatte hindurch auf die Pflasterelemente einwirkt. Dies führt jedoch nicht zu zufriedenstellenden Ergebnissen, weil die Gummiplatte die Rüttelkraft dämpft. Die Pflasterelemente kommen nicht in die Ebene des Fahrwegs. Sie werden auch nicht ausreichend in das Bett gedrückt.

Wenn nach dem Rüttelvorgang bei einigen Pflasterelementen Eckbereiche weggebrochen sind, sind aufwendige Nacharbeiten notwendig. Jedes einzelne, defekte Pflasterelement muss ausgebaut werden, es muss durch ein neues Pflasterelement ersetzt werden. Dies erfordert erheblichen Einsatz und Aufwand. Die Arbeiten müssen manuell durchgeführt werden. Es ist praktisch nicht erreichbar, dass das neue Pflasterelement so ideal in der abgerüttelten Fahrwegebene liegt, wie dies für die benachbarten Pflasterelemente der Fall ist.

Hiervon ausgehend liegt der Erfindung die Aufgabe zugrunde, ein Pflasterelement der eingangs genannten Art dahingehend weiterzubilden, dass seine Eckbereiche weniger bruchanfällig für einen Rüttelvorgang sind und dass es eine mehr oder weniger fugenlose Verlegung ermöglicht.

Diese Aufgabe wird gelöst durch ein mehreckiges Pflasterelement aus Kunststein, insbesondere Betonformstein, das für Fahrwege bestimmt ist und eine Oberseite aufweist, die im Wesentlichen durch eine Hauptfläche gebildet ist, welche in einer Ebene liegt, und die Eckbereiche mit Ecken aufweist wobei die Oberseite zudem Eckschrägen aufweist, die im Wesentlichen dreieckförmig sind, die sich außerhalb der Hauptfläche befinden und die entlang einer Linie, die in der Ebene liegt, mit der Hauptfläche verbunden sind, wobei die Eckschrägen begrenzt sind durch die Linie und zwei Seitenkanten, die von der Ecke, die der Eckschräge zugeordnet ist, ausgehen, und wobei jede Eckschräge ausgehend von der Linie bis hin zur Ecke zunehmend gegenüber der Ebene abfällt, die Ecke minimal 0,3 mm und maximal 3 Millimeter, jeweils +/- 30%, unterhalb der Ebene liegt, und die Ecke 6 bis 30 mm von der Linie beabstandet ist. Nach der abgeschlossenen Verlegung soll die Ebene der Hauptfläche in der Fahrwegebene liegen.

Erfindungsgemäß hat der Stein an zumindest einigen Ecken der Oberseite, vorzugsweise an allen Ecken der Oberseite Eckschrägen. Diese sind über die Linie, die in der Ebene liegt, mit der Hauptfläche verbunden. Die Eckschrägen befinden sich unterhalb der Ebene, in der die Hauptfläche liegt. Die Eckschrägen fallen zunehmend, mit wachsendem Abstand von der Linie, zur Ecke hin ab. Der Abfall ist so bemessen, dass er insgesamt zwischen 0,3 bis 3 mm liegt. Durch diese Eckschrägen wird während des Abrüttelns durch eine Rüttelplatte ein erster Kontakt an der Ecke selbst vermieden. Eine starke Belastung der Ecke selbst ist während des Rüttelvorgangs dadurch weitgehend ausgeschlossen. Die Rüttelplatte kommt mit der Hauptfläche in Kontakt, die Eckschrägen bleiben unterhalb der Rüttelplatten während des Abrüttelns. Innerhalb der Hauptfläche hat das Pflasterelement eine hohe Festigkeit, ein Abbrechen eines Eckbereichs ist weitgehend ausgeschlossen.

Aufgrund der tieferliegenden Ecken wird die Gefahr eines Bruchs der Eckbereiche weitestgehend vermieden. Damit aber entfallen auch die bei einem Bruch der Eckbereiche verbundenen, aufwendigen Nacharbeiten.

Die Eckschrägen sind so ausgebildet, dass sie einerseits flächenmäßig relativ klein sind und andererseits optisch praktisch nicht auffallen. Die Absenkung gegenüber der Ebene wird so gering wie möglich gehalten. Sie wird vorzugsweise so gewählt, dass sie optisch gar nicht auffällt. Sie stört auch den Abrollvorgang eines Rades praktisch nicht. Dies gilt insbesondere dann, wenn die Pflasterelemente nicht auf Kreuzfuge verlegt werden.

Als bevorzugte Absenkung der Ecken hat sich ein Maß von 0,4 bis 1,5 mm bewährt. Günstig sind Absenkungen von etwa 0,4 bis 0,8 mm.

Vorzugsweise ist die Ecke von der Linie in einem Maß von 8 bis 30 mm, vorzugsweise 10 bis 25 mm beabstandet. Aufgrund dieses Maßes und der geringen Absenkung ist die Absenkung, die im Bereich der Eckschrägen vorliegt, optisch praktisch nicht wahrnehmbar.

Der Verlauf des Abfalls der Eckschräge ausgehend von der Linie bis hin zur Ecke ist beliebig. Die Eckschräge kann durch eine einzige Schrägfläche begrenzt sein, die im Winkel in die Linie übergeht. Es kann aber auch ein abgerundeter Übergang an der Linie in die Eckschräge durchgeführt werden. Möglich sind auch zwei hintereinander angeordnete Schrägflächen, wobei die beiden Schrägflächen in einer Zwischenlinie, die sich zwischen der Ecke und der Linie befindet, zusammenhängen.

Vorzugsweise ist die Eckschräge als gleichseitiges Dreieck ausgebildet. Die beiden Seitenkanten, die von der Ecke ausgehen, haben dann die gleiche Länge.

Vorzugsweise hat das Pflasterelement eine rahmenartig umlaufende Fase, die vorzugsweise 3 bis 5 mm breit ist. Diese Fase kann als Schräge, als Stufe, als Schräge plus Stufe oder dergleichen ausgeführt sein. Sie ist nach dem Stand der Technik ausgebildet.

Die Ecke kann als scharf ausgebildete Ecke ausgeführt sein, sie kann aber auch als abgerundete oder abgeschrägte Ecke ausgebildet sein. Die Form der Ecke hängt im Wesentlichen davon ab, ob und wie eine rahmenartige Fase ausgebildet ist.

Die Hauptfläche ist vorzugsweise glatt. Dabei wird unter glatt jegliche Zwischenform zwischen einer spiegelglatten Fläche und einer mehr oder weniger rauhen Fläche, beispielsweise einer strukturierten Fläche, verstanden. Entscheidend ist lediglich, dass ein Rad so gut wie möglich über die Hauptfläche abrollen kann.

Weitere Vorteile und Merkmale der Erfindung ergeben sich aus den übrigen Ansprüchen sowie der nun folgenden Beschreibung von drei nicht einschränkend zu verstehenden Ausführungsbeispielen der Erfindung, die unter Bezugnahme auf die Zeichnung im Folgenden näher erläutert werden. In dieser Zeichnung zeigen:
- Fig. 1:: einen Schnitt entlang der Schnittebene I-I in Fig. 2,
- Fig. 2:: eine Draufsicht auf den Formstein gemäß Fig. 1,
- Fig. 3:: einen Schnitt entlang der Schnittebene III-III in Fig. 2,
- Fig. 4:: einen Teil eines Schnitts entlang der Schnittebene IV-IV in Fig. 2 in vergrößerter Darstellung und im Bereich des Details A in Fig. 1,
- Fig. 5:: eine vergrößerte Darstellung wie Fig. 4, jedoch nun für ein zweites Ausführungsbeispiel,
- Fig. 6:: eine vergrößerte Darstellung wie Fig. 4, jedoch nun für ein drittes Ausführungsbeispiel,
- Fig. 7:: eine schnittbildliche, prinzipielle Darstellung einer Form und einer Druckplatte für die Herstellung des Pflasterelementes nach den Figuren 1 bis 4, gezeigt ist der Zustand, in dem die Form bereits mit Masse gefüllt ist, die Druckplatte sich aber noch oberhalb der Form befindet und noch nicht mit der Masse Kontakt aufgenommen hat, gezeigt ist ein Schnitt durch die Form entsprechend der Schnittebene I-I für das Pflasterelement und
- Fig. 8:: eine vergrößerte Darstellung des Details B aus Figur 7.

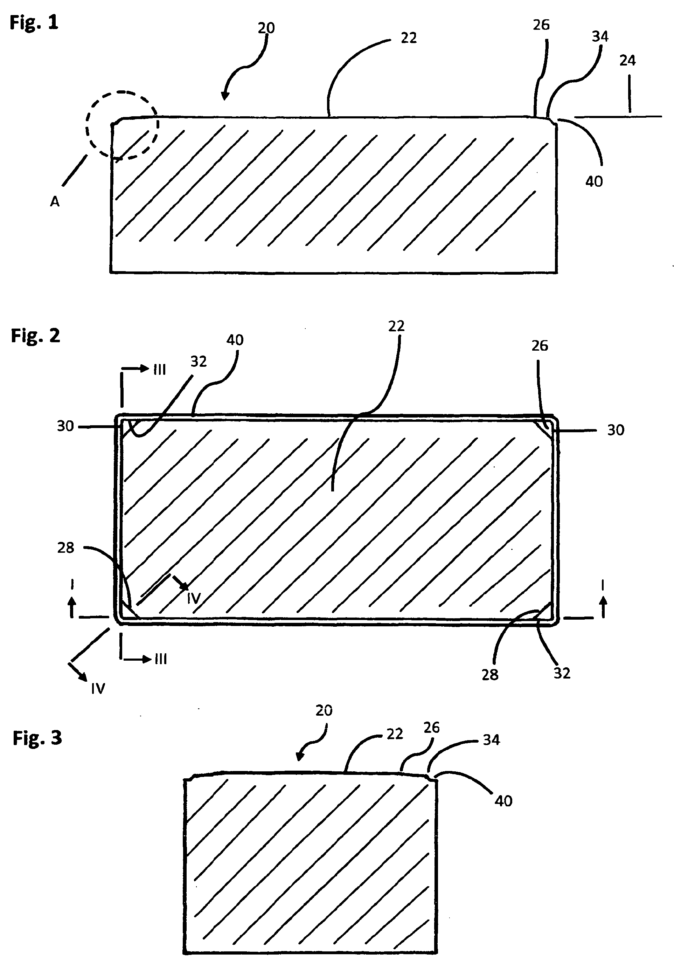

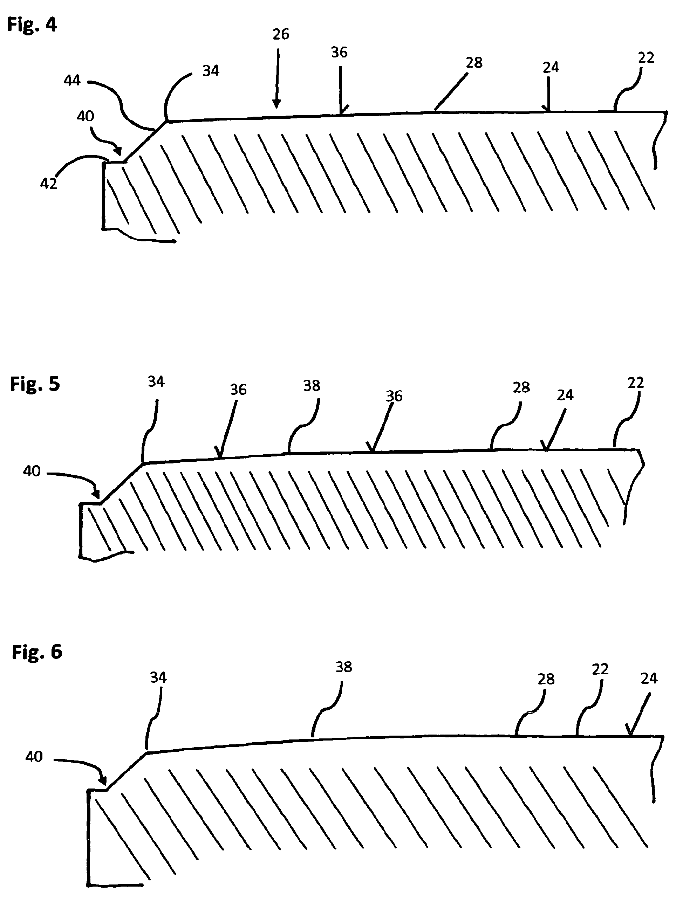

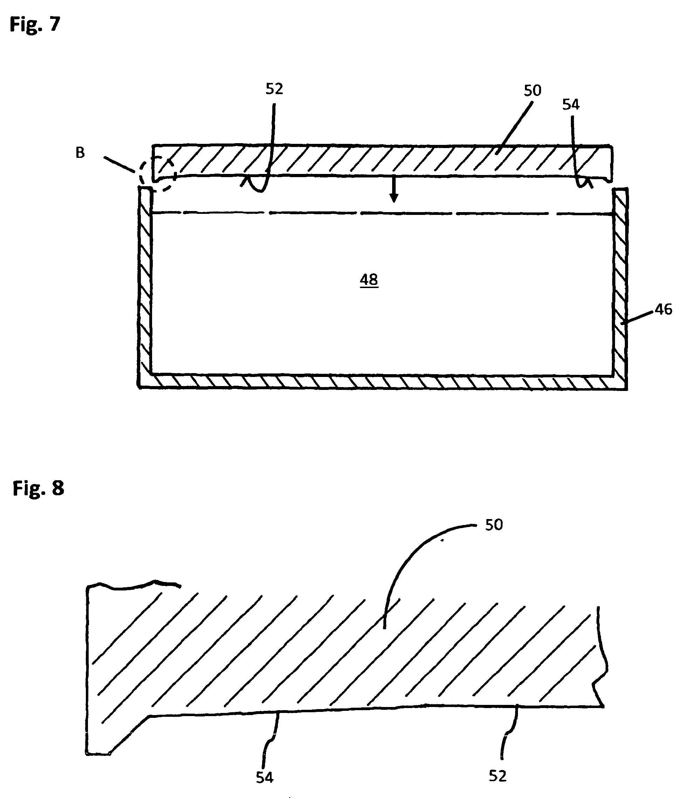

Die Figuren 1 bis 4 zeigen ein erstes Ausführungsbeispiel, die hierzu passende Form und die zugehörige Druckplatte sind aus den Figuren 7 und 8 ersichtlich. Die beiden Ausführungsbeispiele nach den Figuren 5 und 6 werden nur insoweit besprochen, als sie sich vom ersten Ausführungsbeispiel unterscheiden. Ansonsten gilt die folgende Beschreibung des ersten Ausführungsbeispiels auch für diese beiden Ausführungsbeispiele.

Die Anmelderin behält sich vor, beliebige Merkmale und Untermerkmale der Ansprüche und/oder Beschreibung miteinander zu kombinieren, auch wenn eine derartige Kombination nicht im Einzelnen konkret angesprochen ist.

Das Pflasterelement, wie es in den Figuren 1 bis 3 dargestellt ist, ist quaderförmig. Es ist aus Beton hergestellt. Unter dem Begriff Kunststein wird dabei jede Form eines künstlich hergestellten Steins verstanden, der Unterschied zu Kunststein ist Naturstein, die Erfindung bezieht sich nicht auf Natursteine. Zu Pflasterelementen gehören auch Ziegelsteine, weiterhin Steine, die anorganisch oder sonstig hydraulisch gebunden sind.

Das Pflasterelement hat eine viereckige Oberseite 20, sie wird häufig auch als Sichtseite bezeichnet. Sie wird im Wesentlichen durch eine Hauptfläche 22 gebildet, die in einer Ebene 24 liegt. Bei verlegten Pflasterelementen ist diese Ebene 24 die Fahrebene. Die Oberseite 20 weist insgesamt vier Eckschrägen 26 auf, die im Wesentlichen dreieckförmig sind. Sie befinden sich außerhalb der Hauptfläche 22, sie sind mit dieser verbunden. Sie sind entlang einer Linie 28, die in der Ebene 24 liegt, mit der Hauptfläche 22 verbunden. Jede Eckschräge 26 ist durch die bereits genannte Linie 28 und zudem durch zwei Seitenkanten 30, 32 begrenzt. Diese Seitenkanten 30, 32 laufen auf eine Ecke 34 zu. Ausgehend von der Linie 28 fällt die Eckschräge 26 zunehmend gegenüber der Ebene 24 ab. Die Ecke 34 bildet den tiefsten Punkt. Der Abfall ausgehend von der Linie 28 und damit der Ebene 24 liegt bei ca. 0,5 mm.

Die Ecke 34 ist ca. 8 mm von der Linie 28 beabstandet. Die beiden Seitenkanten 30 und 32 sind gleich lang. Die Eckschräge 26 wird durch ein gleichseitiges Dreieck begrenzt. Bei einem viereckigen, quaderförmigen Pflasterelement wie im ersten Ausführungsbeispiel dargestellt, ist dieses Rechteck zugleich noch ein rechtwinkliges Rechteck.

Im ersten Ausführungsbeispiel hat die Eckschräge 26 eine Schrägfläche 36. Diese ist eine ebene Fläche. Sie liegt in einem Winkel unter 180° und über 170° zur Ebene 24. Im zweiten Ausführungsbeispiel nach Figur 5 weist die Eckschräge 26 zwei Schrägflächen 36 auf, zwischen denen sich eine Zwischenlinie 38 befindet. Im dritten Ausführungsbeispiel nach Figur 6 schließt die Eckschräge 26 glatt und ohne Knick, somit stetig differenzierbar, an die Hauptfläche 22 an. Die Linie 28 ist daher nur durch die Änderung der Steigung zu erkennen. Die Eckschräge 26 ist nun durch eine gekrümmte Schrägfläche begrenzt.

In bekannter Weise hat das Pflasterelement eine rahmenartig umlaufende Fase 40. Sie wird durch eine kleine Stufe 42, die horizontal verläuft und etwa 1 mm breit ist, und eine daran anschließende 45°-Schräge 44 begrenzt. Die Stufe 42 liegt ca. 2 mm unterhalb der Ecke 34.

In den gezeigten Ausführungsbeispielen wird die viereckige Oberseite 20 durch die Hauptfläche 22, die insgesamt vier Eckschrägen 26 und die rahmenartig umlaufende Fase 40 gebildet. In den gezeigten Ausführungsbeispielen verläuft die Linie 28 gradlinig. Es ist auch möglich, dass sie einen nicht gradlinigen Verlauf hat. Es ist auch möglich, dass die beiden Seitenkanten 30, 32 ungleiche Längen haben. Die Länge der beiden Seitenkanten 30, 32 soll sich nicht mehr als den Faktor 2 voneinander unterscheiden. Der Abstand der Ecke 34 zur Linie 28 kann im Bereich von 6 bis 30 mm liegen.

Das Pflasterelement hat für die dargestellten Ausführungsbeispiele eine Abmessung von 218 x 108 mm, bei einer Höhe von 80 mm. Das Pflasterelement nach den Ausführungsbeispielen wird auch als Rechteckstein bezeichnet.

Beim praktischen Gebrauch, insbesondere beim Abrollen eines Rades über eine Fläche mit den erfindungsgemäßen Pflasterelementen, machen sich die Eckschrägen praktisch nicht bemerkbar. Im Gebrauch rollt ein Rad über die erfindungsgemäßen Pflasterelemente nicht spürbar schlechter ab als bei einem Pflasterelement nach dem Stand der Technik ohne Eckschrägen. Die Hauptfläche grenzt außerhalb der Eckschrägen unmittelbar an die rahmenförmig umlaufende Phase 40 an. Erfindungsgemäß sind die Seitenkanten nicht abgeschrägt, es sind nur die Ecken abgeschrägt. Würde man auch die Seitenkanten abschrägen, wie dies im Stand der Technik oft geschieht, würde man dies beim Überrollen mit einem Rad spüren. Der Vorteil des erfindungsgemäßen Pflasterelementes liegt darin, dass unter Beibehaltung eines möglichst großen Anteils der Oberseite, die in der Ebene 24 liegt, ein Eckenbruch beim Abrütteln vermieden wird.

## Patentansprüche

1. Mehreckiges Pflasterelement aus Kunststein, insbesondere Betonformstein, das für Fahrwege bestimmt ist und eine Oberseite (20) aufweist, die im Wesentlichen durch eine Hauptfläche (22) gebildet ist, welche in einer Ebene (24) liegt und die Eckbereiche mit Ecken (34) aufweist, wobei die Oberseite (20) zudem Eckschrägen (26) in den Eckbereichen aufweist, die im Wesentlichen dreieckförmig sind, die sich außerhalb der Hauptfläche (22) befinden und die entlang einer Linie (28), die in der Ebene (24) liegt, mit der Hauptfläche (22) verbunden sind, wobei die Eckschrägen (26) begrenzt sind durch die Linie (28) und zwei Seitenkanten (30, 32), die von der Ecke (34), die der Eckschräge (26) zugeordnet ist, ausgehen, und wobei jede Eckschräge (26) ausgehend von der Linie (28) bis hin zur Ecke (34) zunehmend gegenüber der Ebene (24) abfällt, **dadurch gekennzeichnet, dass** die Ecke (34) minimal 0,3 mm und maximal 3 Millimeter unterhalb der Ebene (24) liegt, und dass die Ecke (34) 6 bis 30 mm von der Linie (28) beabstandet ist.

2. Pflasterelement nach Anspruch 1, **dadurch gekennzeichnet, dass** die Ecke (34) mindestens 0,4 und maximal 1,5 mm, oder 0,5 +/- 30% bis 1,5 +/-30% mm tiefer als die Ebene (24) liegt.

3. Pflasterelement nach einem der vorangegangenen Ansprüche, **dadurch gekennzeichnet, dass** die Eckschräge (26) mindestens eine Schrägfläche (36) aufweist.

4. Pflasterelement nach Anspruch 3, **dadurch gekennzeichnet, dass** die Schrägfläche (36) eine ebene Fläche ist.

5. Pflasterelement nach einem der vorangegangenen Ansprüche, **dadurch gekennzeichnet, dass** die Eckschräge (26) durch ein gleichseitiges Dreieck begrenzt ist.

6. Pflasterelement nach einem der vorangegangenen Ansprüche, **dadurch gekennzeichnet, dass** die Oberseite (20) eine Fase (40) aufweist, die vorzugsweise 3 bis 5 mm breit ist.

7. Pflasterelement nach einem der vorangegangenen Ansprüche **dadurch gekennzeichnet, dass** die Oberseite (20) ausschließlich durch die Hauptfläche (22), welche in der Ebene (24) liegt, durch die Eckschrägen (26), die unterhalb der Ebene (24) liegen, und gegebenenfalls eine rahmenartig umlaufende Fase (40) gebildet ist.

8. Pflasterelement nach einem der vorangegangenen Ansprüche **dadurch gekennzeichnet, dass** er aus einer Masse (48) eines abbindefähigen Material hergestellt ist, und dass das Material unterhalb der Hauptfläche (22) weniger verdichtet ist als unterhalb der Eckschrägen (26).

## Claims

1. Polygonal pavement element made of artificial stone, in particular, concrete block, which is intended for driveways and comprises a top face (20) which is essentially formed by a main surface (22) which lies in a plane (24), and which comprises corner areas with corners (34), wherein the top face (20) also comprises corner bevels (26) in the corner areas, which are substantially triangular in shape, are located outside the main surface (22), and are connected to the main surface (22) along a line (28) located in the plane (24), the corner bevels (26) are delimited by the line (28) and two side edges (30, 32) starting from the corner (34) that is associated with the corner bevel (26), and wherein each corner bevel (26), drops progressively starting from the line (28) towards the corner (34) relative to the plane (24), **characterized in that** the corner (34) lies minimally 0,3 mm and a maximum of 3 millimeters below the plane (24), and **in that** the corner (34) is spaced apart from 6 to 30 mm from the line (28).

2. Pavement element according to claim 1, **characterized in that** the corner (34) lies at least 0,4 and at most 1,5 mm, or 0,5 +/- 30% to 1,5 +/- 30% mm deeper than is the plane (24).

3. Pavement element according to any one of the preceding claims, **characterized in that** the corner bevel (26) has at least one inclined surface (36).

4. Pavement element according to claim 3, **characterized in that** the inclined face (36) is a flat surface.

5. Pavement element according to any one of the preceding claims, **characterized in that** the corner bevel (26) is defined by an equilateral triangle.

6. Pavement element according to any one of the preceding claims, **characterized in that** the top (20) has a chamfer (40) which is preferably 3 to 5 mm wide.

7. Pavement element according to any one of the preceding claims, **characterized in that** the top face (20) is exclusively formed by the main surface (22) which lies in the plane (24) and by the corner bevels (26) which lie below the plane (24), and, where appropriate, a frame-like peripheral chamfer (40).

8. Pavement element according to any one of the preceding claims, **characterized in that** it is made of a mass (48) of a settable material, and that the material is less compacted below the main surface (22) than below the corner bevels (26).

## Revendications

1. Elément de pavement polygonale en pierre artificielle, en particulier, bloc de béton, qui est destiné à des chemins et comprend une face supérieure (20), qui est essentiellement formé par une surface principale (22) qui se trouve dans un plan (24), et qui a des régions cornières avec des coins (34), la face supérieur (20) comprend également des coins d'angle (26) dans les régions cornières, qui sont sensiblement de forme triangulaire, sont situés en dehors de la surface principale (22) et sont reliés le long d'une ligne (28), située dans le plan (24), avec la surface principale (22) de sorte que les coins d'angle (26) sont délimités par la ligne (28) et deux bords latéraux (30, 32) partant du coin (34) associée avec le coin d'angle (26), et chaque coin d'angle (26) descend à partir de la ligne (28) vers le coin (34) par rapport au plan (24), **caractérisé en ce que** le coin (34) est au minimum de 0,3 mm et au maximum 3 mm au-dessous du plan (24) et **en ce que** le coin (34) est espacé à partir de 6 à 30 mm de la ligne (28).

2. Elément de pavement selon la revendication 1, **caractérisé en ce que** le coin (34) est d'au moins 0,4 et d'au plus 1,5 mm, ou 0,5 +/- 30% à 1,5 +/- 30% mm inférieur au plan (24).

3. Elément de pavement selon l'une quelconque des revendications précédentes, **caractérisé en ce que** le coin d'angle (26) présente au moins une surface inclinée (36).

4. Elément de pavement selon la revendication 3, **caractérisé en ce que** la surface inclinée (36) est une surface plane.

5. Elément de pavement selon l'une quelconque des revendications précédentes, **caractérisé en ce que** le coin d'angle (26) est définie par un triangle équilatéral.

6. Elément de pavement selon l'une quelconque des revendications précédentes, **caractérisé en ce que** la surface supérieure (20) présente un chanfrein (40) qui est de préférence de 3 à 5 mm de large.

7. Elément de pavement selon l'une quelconque des revendications précédentes, **caractérisé en ce que** la face supérieure (20) est formé exclusivement par la surface principale (22), qui se trouve dans le plan (24), et par les coins d'angle (26), qui se trouvent en dessous du plan (24), et, le cas échéant, un chanfrein périphérique en forme de cadre (40).

8. Elément de pavement selon l'une quelconque des revendications précédentes, **caractérisé en ce qu'**il est constitué d'une masse (48) d'un matériau durcissable, et que la matière est moins compacté au-dessous de la surface principale (22) que en dessous les coins d'angle (26).
